Europäisches Patentamt

European Patent Office

Office européen des brevets

(11) Veröffentlichungsnummer: **0 224 007 B1**

## (12) EUROPÄISCHE PATENTSCHRIFT

(45) Veröffentlichungstag der Patentschrift: 06.03.91

(51) Int. Cl.5: **B29C 33/10**, B29C 67/18

(21) Anmeldenummer: **86114288.3**

(22) Anmeldetag: **15.10.86**

(54) **Verfahren zur Herstellung von Kunststoff-Formteilen mit an- oder eingeformten gummielastischen Teilen.**

(30) Priorität: 26.11.85 DE 3541768

(43) Veröffentlichungstag der Anmeldung:
03.06.87 Patentblatt 87/23

(45) Bekanntmachung des Hinweises auf die
Patenterteilung:
06.03.91 Patentblatt 91/10

(84) Benannte Vertragsstaaten:
**DE FR GB IT NL SE**

(56) Entgegenhaltungen:
**AU-B- 48 395**
**DE-A- 2 145 104**
**FR-A- 1 395 896**
**FR-A- 2 166 206**

**PLASTICS ENGINEERING, Band 35, Nr. 1, Januar 1979, Seiten 43-50; P.E. ALLEN:
"Injection-mold venting: the hidden processing parameter"**

(73) Patentinhaber: **WOCO Franz-Josef Wolf & Co.**
**Sprudelallee 19**
**W-6483 Bad Soden-Salmünster(DE)**

(72) Erfinder: **Wolf, Franz-Josef**
**Sprudelallee 19**
**W-6483 Bad Soden-Salmünster(DE)**
Erfinder: **Kaminski, Peter**
**Am Rausch 16**
**W-6460 Gelnhausen 4 (Haitz)(DE)**

(74) Vertreter: **Jaeger, Klaus, Dipl.-Chem. Dr. et al**
**Jaeger, Steffens & Köster Patentanwälte**
**Pippinplatz 4a**
**W-8035 München-Gauting(DE)**

## Beschreibung

Die Erfindung betrifft ein Verfahren der im Oberbegriff des Patentanspruchs 1 genannten Art.

Eine Abschlußplatte, insbesondere zum Verschließen des Bechergehäuses eines eleKtrischen Kondensators, die nach dem im Oberbegriff des Patentanspruchs 1 genannten Verfahren hergestellt wird, ist aus der deutschen Patentschrift DE-A- 21 45 104 bekannt.

Die praktische Erfahrung mit dem bekannten Verfahren hat gezeigt, daß das Einbringen der Formmasse, insbesondere das Einspritzen von Gummimischung in den zur Bildung des an den Fromstoff anzuformenden gummielastischen Teils zwischen dem Nest des Formwerkzeugs und den Flächen des Formstoffs gebildeten nestartigen Hohlraum eine kritische Füllgeschwindigkeit nich überschritten werden darf. Bei höheren Füllgeschwindigkeiten werden unsaubere Oberflächen am anvulkanisierten gummielastischen Teil erhalten. Außerdem werden mit einer für die wirtschaftliche Fertigung entsprechender Teile zu hohen Rate Ausfallprodukte erhalten, bei denen die eingespritzte oder anderweitig in den Hohlraum eingedrückte Formmasse trotz der umlaufenden Hochkante oder Ringrippe um den Bereich des zu bildenden gummielastischen Anformlings herum aus diesem Bereich auftritt und auf der nicht mit er gummielastischen Masse zu bedeckenden Oberfläche des Formstoffs filmartige Überzüge bildet.

Der Erfindung liegt angesichts dieses Standes der Technik die Aufgabe zugrunde, die Effektivität der aus der eingangs ganannten deutschen Patentschrift bekannten Hochkante dahingehend zu verbessern, daß der Vorgang des Einbringens der Formmasse beschleunigt und das Ausbrechen der Formmasse auf die freizuhaltenden Oberflächenbereiche des Formstoffes noch besser und zuverlässiger unterdrückt werden kann, so daß also bei der Massenfertigung entsprechender gummierter Artikel die zum Einspritzen erforderliche Taktzeit verkürzt und die bei der Produktion unvermeidbare Ausschußrate gesenkt werden kann.

Zur Lösung dieser Aufgabe schafft die Erfindung ein Verfahren der eingangs genannten Art, das die im kennzeichnenden Teil des Anspruchs 1 genannten Merkmale aufweist.

Mit anderen Worten, liegt also der Erfindung die Erkenntnis zugrunde, daß die durch unvermeidbare Paßungenauigkeiten zwischen Formwerkzeug und dem zu gummierenden Formstoff geschaffenen Undichtheiten nicht ausreichen, um die in den mit der Formmasse aufzufüllenden Hohlräumen eingeschlossene Luft beim Füllvorgang entweichen zu lassen, und daß insbesondere das immer wieder beobachtete Ausbrechen der Formmasse über die Hochkante hinweg auf die freizuhaltende Oberfläche des Formstoffs durch einen Luftausbruch verursacht und eingeleitet wird, der durch die relativ hohe Arbeitsptemperatur beim Umspritzen des Kunststoff-Formstoffes nicht mehr vollständig zu unterdrücken ist.

Die Erfindung beruht weiterhin auf der zunächst überraschenden Erkenntnis, daß diese unerwünschten Verhältnisse dadurch verändert werden können, daß gerade in dem Bereich, in dem höchste Dichtheit angestrebt und erwartet wird, nämlich im Dichtungsbereich bzw. auf der Dichtungslinie, zwischen dem Formwerkzeug und dem Oberrand der Hochkante des Formstoffs, bewußt ausgeformte undichte Stellen in Form von haareinen Kanälen geschaffen werden, durch die hindurch eine kontrollierte, gesteuerte und gelenkte Ableitung der aus dem mit der Frommasse zu füllenden Hohlraum verdrängten Luft erfolgen kann. Andererseits sind diese Kanäle jedoch so fein, daß durch sie hindurch praktisch keine Formmasse auf die nicht zu bedeckende Oberfläche austreten kann. Wenn dies in Einzelfällen dennoch erfolgt, handelt es sich hierbei um scharf begrenzte, nahezu mikroskopisch feine rippenartige Überläufe, die meist bereits beim Entformen des gummierten Formstoffs abreißen. Erst recht problemlos werden solche in einzelnen Anwendungsfällen gelegentlich auftretenden Kanalüberspritzungen entfernt, wenn bei der Herstellung von Präzisionsteilen ohnehin eine Nachbearbeitung der gummierten Formstoffoberflächen erforderlich ist, beispielsweise werden muß. Ob solche Kanalüberspritzungen jedoch überhaupt auftreten, ist primär eine Frage der zur Hestellung der gummielasti schen angeformten Teile verwendeten Formmasse und ist sekundär eine Frage der geometrischen Abstimmung des auszufüllenden Hohlraumes und des Entlüftungskanals. Diese zuletzt genannten Parameter kann der Fachmann beim gebräuchlichen Spritzgießen von Gummimischungen so aufeinander abstimmen, daß eine Kanalüberspritzung, das heißt ein Austreten der Gummimasse durch die Entlüftungskanäle hindurch auf die freizuhaltende Oberfläche des Formstoffs mit Sicherheit ausgeschlossen werden kann. Im Vergleich zum flächigen Übertritt der Formmasse über die Hochkante hinweg auf die freizuhaltende Oberfläche des Formstoffs, wie sie nach dem bekannten Verfahren zu Ausschußprodukten führt, braucht ein Formteil selbst dann nicht verworfen zu werden, wenn tatsächlich, wie dies bei einigen Siliconmischungen der Fall sein kann, Formmasse durch die Entlüftungskanäle hindurch auf die freizuhaltende Oberfläche herausgedrückt wird. Während nach dem Stand der Technik große Flächenbereiche der Fromstoffoberfläche bedeckende Filme oder Überzugshäutchen gebildet werden, werden nach dem Verfahren der Erfindung lediglich definierte Rippen erhalten, deren Querschnitt im Be-

reich von $10^{-4}$ bis $10^{-3}$ mm² liegt und deren Länge einen Größenordnungsbereich von 0,1 bis 0,2 mm kaum überschreitet.

Der Kanal bzw. die Kanäle, durch die hindurch nach dem Verfahren der Erfindung die von der Formmasse verdrängte Luft in den Spalt zwischen Formstoffoberfläche und Formwerkzeug abgeleitet wird, kann entweder im Formwerkzeug, genauer in dem Oberflächenbereich des Formwerkzeugs als offene Rinne ausgebildet sein, die der Oberkante der Hochkante anliegt, wenn das im Formwerkzeug ausgebildete Formnest mit dem zu gummierenden Formstoff beschickt ist, oder kann als ebenfalls haarfeine Rinne in der Oberkante der Hochkante bzw. der Ringrippe ausgespart sein. Eine gleichzeitige Ausbildung der Rinne sowohl in der Formwerkzeugoberfläche als auch in der umlaufenden Hochkante dergestalt, daß der Kanal durch beide Rinnen gemeinsam definiert wird, wird sich aus Gründen der Paßrobleme und auch des zu großen Kanalquerschnitts kaum oder nur in speziellen Ausnahmefällen empfehlen. Eher mag es zur Herstellung bestimmter Fromlinge angezeigt sein, wenn die Rinnen sowohl im Formwerkzeug als auch in der Hochkante ausgebildet sind, dann jedoch dergestalt, daß jede für sich einen separaten Kanal definiert. Vorzugsweise wird jedoch nur von der einen oder anderen Möglichkeit der Kanalbildung Gebrauch gemacht, wobei wiederum insbesondere vorzugsweise die in Zusammenwirken mit der Hochkante des Formstoffs den Kanal bildende Rinne wegen der difinierteren Verhältnisse und der besseren Reproduzierbarkeit in der Oberfläche des Formwerkzeugs, genauer gesagt der Formnestoberfläche des Formwerkzeugs, ausgebildet ist.

Wie an sich bekannt, steht die Hochkante typischerweise nur Bruchteile eines Millimeters über die umgebende Oberfläche des Formstoffs vor, und zwar für die Zwecke der vorliegenden Erfindung vorzugsweise mit einer Höhe im Bereich von 0,02 bis 0,3 mm, insbesondere mit einer Höhe um 0,1 mm. Die haarfeinen Kanäle, die den mit der Formmasse zu füllenden Hohlraum zwischen Formstoff und Formwerkzeug mit dem flächigen Spalt zwischen der freizuhaltenden Formstoffoberfläche und Formwerkzeugoberfläche und/oder gegebenenfalls im Formwerkzeug speziell ausgebildeten feinen Rinnen oder Kanälen verbinden, haben einen Querschnitt, der prinzipiell so klein wie möglich ist, um der Formmasse nach Möglichkeit den Durchtritt zu versperren, der auf der anderen Seite jedoch zumindest so groß bemessen ist, daß er dem angestrebten Zweck der planvoll geleiteten Entlüftung des mit der Formmasse zu füllenden Hohlraums entspricht. Für die praktische Massenfertigung mit kurzen Taktzeiten haben sich Kanal querschnitte im Bereich von $2 \bullet 10^{-3}$ bis $1 \bullet 10^{-4}$ mm², insbesondere im Bereich von 0,0005 mm² bewährt.

Die zur Durchführung des Verfahrens eingesetzten Kunststoff-Formstoffe bestehen vorzugsweise aus glasfaserverstärkten Kunststoffen, da diese gegenüber den jeweiligen gleichen unverstärken Kunststoffen die bessere Formbeständigkeit unter Produktionsbedingungen aufweisen.

Das Verfahren wird vorzugsweise zum Anformen und Anvulkanisieren von Gummidichtungen an oder in Kunststoff-Formteilen, insbesondere scheibenförmigen Formteilen wie beispielsweise Verschlußdeckeln mit und ohne Durchführungsöffnungen, verwendet. Solche mit eingespritzten Durchführungsgummierungen und/oder um den Außenrand herumgespritzten Dichtungen versehenen Deckel oder Scheiben dienen beispielsweise dem Verschließen von Kondensatorbechergehäusen, Akkumulatoren oder anderen elektrischen Bauelementen, dem Verschließen von Aggregategehäusen oder Schaltkästen, dem Verschließen von Wärmetauschergehäusen, insbesondere Rohrbündeltauschern, oder dem Abschließen offener Rohre oder Rohrleitungen.

Die Erfindung ist im folgenden anhand von Ausführungsbeispielen in Verbindung mit den Zeichnungen näher beschrieben. Es zeigen:

Fig. 1    eine erstes Ausführungsbeispiel zur Durchführung des Verfahrens in nicht maßstäblicher stark vergrößerter schematischer Darstellung; und

Fig. 2    ein zweites Ausführungsbeispiel zur Durchführung des Verfahrens ebenfalls in stark vergrößerter, nicht maßstäblicher schematischer Schnitt-Teildarstellung.

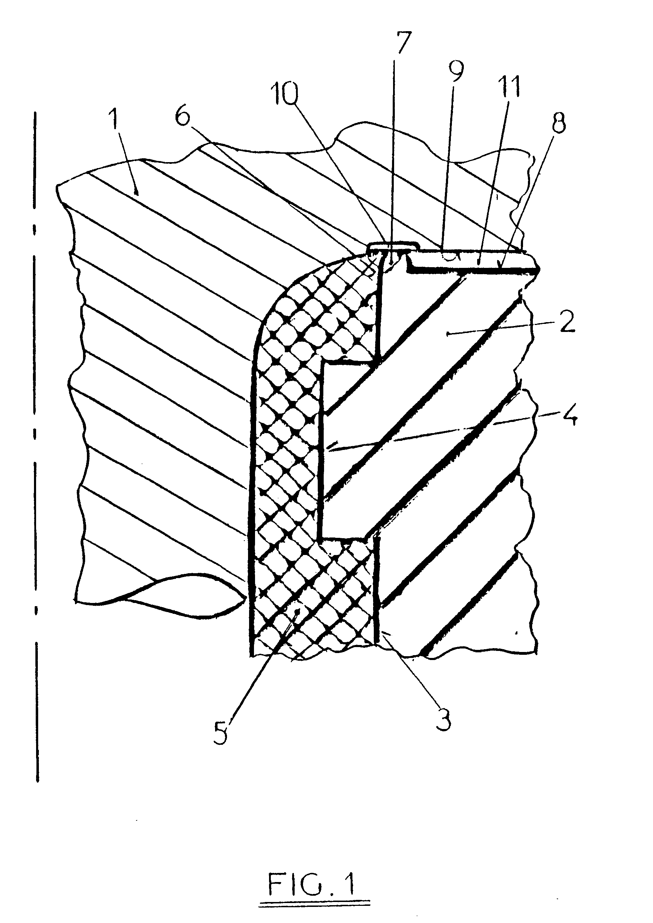

In der Fig. 1 ist im Schnitt ein Teil eines Formwerkzeugs 1 gezeigt, in das eine Kunststoffscheibe 2 eingesetzt ist, die aus einem Polyamid besteht, das mit 30 Gew.-% Glasfasern verstärkt ist. In der Kunststoffscheibe 2 ist eine Bohrung 3 ausgebildet, in die nach radial innen flanschartig ein Verankerungsring 4 vorspringt.

In der in Fig. 1 gezeigten Darstellung ist der zwischen dem Formwerkzeugteil 1 und der Bohrung 3 der Kunststoffscheibe 2 gebildete Ringraum mit einer Formmasse 5 im Spritzgießverfahren ausgefüllt, die nach dem Vernetzen eine Dichtungszwecken dienende ringförmige oder manschettenförmige Gummiauskleidung der Bohrung 3 der Kunststoffscheibe 2 bildet.

Um den Rand 6 der Bohrung 3 der Kunststoffscheibe 2 herum läuft in sich geschlossen eine 0,1 mm hohe Hochkante in Form einer sich im Querschnitt verjüngenden Ringkante 7 um. Bei geschlossenem Formwerkzeug ist diese Hochkante 7 fest auf die innere Oberfläche 9 des Formwerkzeugs 1 gepreßt, um zu verhindern, daß die Formmasse 5 zwischen der Formwerkzeugoberfläche 9 und der Oberkante der Hochkante 7 hindurch auf die nicht zu gummierende und freizuhaltende Oberfläche 8 der Kunststoffscheibe 2 austritt.

Einander diametral gegenüberliegend sind in der Oberfläche 9 des Formwerkzeugs 1 zwei Gruppen von je drei kurzen flachen Rillen 10 in dem Oberflächenbereich ausgebildet, in dem die umlaufende Hochkante 7 an der Oberfläche 9 des Formwerkzeugs 1 anliegt. Die Rinnen oder Kanäle 10 verlaufen quer zur Längserstreckung der umlaufenden Hochkante 7 und sind länger als die Hochkante 7 breit ist. In dem hier gezeigten Ausführungsbeispiel hat die Rinne 10 einen quadratischen Querschnitt mit einer Kantenlänge von 0,02 mm. Bei geschlossenem Formwerkzeug bildet die Rinne 10 also einen Kanal mit einem Querschnitt von 0,0004 mm², der den zwischen dem Formwerkzeug 1 und der Bohrung 3 der Kunststoffscheibe 2 gebildeten Hohlraum zum Zwecke des Luftaustritts beim Füllen dieses Hohlraums mit der Formmasse 5 mit dem flächigen Spalt 11 verbindet, der in an sich bekannter Weise über einen Formwerkzeugbelüftungskanal mit der Umgebungsatmosphäre in Verbindung steht.

Der in der Fig. 1 nicht dargestellte Angußkanal zum Einbringen der Formmasse 5 befindet sich auf der den Kanälen 10 axial gegenüberliegenden Seite der Bohrung 3.

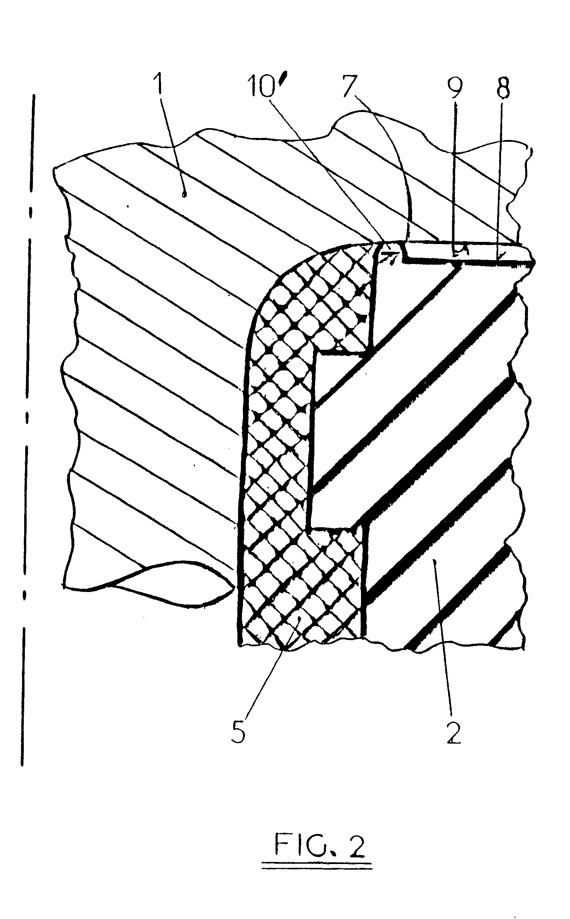

Bei dem in Fig. 2 gezeigten Ausführungsbeispiel sind für gleiche Teile gleiche Bezugsziffern wie bei dem in Fig. 1 gezeigten Ausführungsbeispiel verwendet, so daß an dieser Stelle auf eine erneute Beschreibung des Formwerkzeugs 1, des Formstoffs 2 und der in den Bohrungshohlraum gefüllten Formmasse 5 verzichtet werden kann. Der Unterschied zwischen dem in Fig. 2 und dem in Fig. 1 gezeigten Ausführungsbeispiel der Erfindung besteht darin, daß bei dem in der Fig. 2 gezeigten Ausführungsbeispiel die den Belüftungskanal bildende haarfeine Rinne 10' nicht in der Formnestoberfläche 9 des Formwerkzeugs 1, sondern in der umlaufenden Hochkante 7 des Formstoffs bzw. der Kunststoffscheibe 2 ausgebildet ist. Die Rinne 10' ist als keilförmige Kerbe mit dreieckigem Querschnittprofil und einer Querschnittsfläche von ungefähr 0,0002 mm² ausgebildet. Die kerbenartige Rinne 10' wird nicht durch nachträgliche Bearbeitung, sondern von vornherein bei der Herstellung der Kunststoffscheibe 2 durch Spritzgießen ausgeformt. Gegenüber der in Fig. 1 gezeigten Ausgestaltung der Erfindung weist die in Fig. 2 gezeigte Ausgestaltung den Vorteil auf, daß der Kanal 10' beim Einspritzen der Formmasse 5 stets und unter allen Umständen offen ist und nicht durch Reste vernetzter Gummimasse verschlossen sein kann, die unter Umständen beim Reinigen der Formwerkzeugs vor erneuter Benutzung nicht vollständig aus der Rinne 10 (Fig. 1) entfernt worden sind. Dafür weist die in Fig. 2 gezeigte Ausgestaltung gegenüber der in Fig. 1 gezeigten Ausgestaltung der Erfindung jedoch den Nachteil der geringeren Reproduzierbarkeit und Konstanz des freien Kanalquerschnitts von Takt zu Takt auf, da die Hochkante 7 bestimmungsgemäß beim Schließen des Formwerkzeugs zumindest geringfügig verquetscht und verformt wird. Bei dem in Fig. 1 gezeigten Ausführungsbeispiel liegt diese Streubreite des tatsächlichen freien Kanalquerschnitts unterhalb der praktischen Nachweisgrenze.

Die dieser Beschreibung begefügte Zusammenfassung wird als offenbarungswesentlicher Bestandteil der vorliegenden Anmeldungsunterlagen angesehen.

## Ansprüche

1.  Verfahren zur Herstellung von Kunststoff-Formteilen mit an- oder eingeformten gummielastischen Teilen, bei dem um Ausnehmungen, Bohrungen (3) oder Ränder des zu gummierenden Formstoffes (2) herum, in die hinein oder um die herum eine plastische oder flüssige Formmasse (5) zur Bildung der gummielastischen Teile eingespritzt, eingepreßt oder eingegossen wird, geschlossen umlaufende Hochkanten (7) oder Ringrippen ausgebildet sind, auf denen vor dem Einbringen der Formmasse umlaufend dichtend dafür vorgesehene Oberflächenbereiche (9) des Formwerkzeugs (1) zur Anlage gebracht werden, dadurch **gekennzeichnet,** daß die beim Einbringen der Formmasse verdrängte Luft durch mindestens einen haarfeinen Kanal (10;10') in den Spalt (11) zwischen Formstoffoberfläche (8) und Formwerkzeug (1) abgeleitet wird, wobei dieser Kanal als offene Rinne, die quer zum Verlauf der Hochkante verläuft, in der Oberkante der Hochkante und/oder in den gegen die Hochkante dichtenden Flächenbereichen des Formwerkzeugs ausgebildet ist.

2.  Formwerkzeug zur Durchführung des Verfahrens nach Anspruch 1 mit einem Formnest-Oberflächenbereich, an den bei geschlossenem Formwerkzeug bestimmungsgemäß eine in sich geschlossen umlaufende Hochkante oder Ringrippe eines eingelegten Formstoffes dichtend zur Anlage gelangt, **gekennzeichnet durch** mindestens eine haarfeine Rinne (10) in diesem FormnestOberflächenbereich (9), die quer zum Verlauf der Hochkante (7) oder Ringrippe des eingelegten Formstoffs (2) ausgerichtet und länger als diese breit ist.

3. Formwerkzeug nach Anspruch 2,
   **gekennzeichnet durch**
   mindestens zwei solcher Rinnen (10), die untereinander symmetrisch zur Ringkontur der Hochkante (7) angeordnet sind.

4. Formwerkzeug nach einem der Ansprüche 2 oder 3,
   **dadurch gekennzeichnet,**
   daß die Rinnen (10') einen Querschnitt im Bereich von 2 10$^{-3}$ bis 1 10$^{-4}$ mm$^2$ haben.

5. Formstoff zur Durchführung des Verfahrens nach Anspruch 1, auch in Verbindung mit dem Formwerkzeug nach einem der Ansprüche 2 bis 4, mit mindestens einer einen zu gummierenden Bereich geschlossen umlaufenden Hochkante oder Ringrippe,
   **gekennzeichnet durch**
   mindestens eine haarfeine Rinne (10') in der Hochkante (7), die quer zum Verlauf der Hochkante (7) ausgerichtet ist und dies vollständig durchgreift.

6. Formstoff nach Anspruch 5,
   **dadurch gekennzeichnet,**
   daß die Hochkante (7) 0,02 bis 0,3 mm über die angrenzenden, nicht zu gummierenden Oberflächenbereiche (8) des Formstoffs (2) übersteht.

7. Formstoff nach einem der Ansprüche 5 oder 6,
   **dadurch gekennzeichnet,**
   daß die Rinnen (10') einen Querschnitt im Bereich von 2.10$^{-3}$ bis 1.10$^{-4}$ mm$^2$ haben.

8. Formstoff nach einem der Ansprüche 5 bis 7, bestehend aus glasfaserverstärktem Kunststoff.

9. Verwendung des Verfahrens nach Anspruch 1 zum Anformen und Anvulkanisieren von Gummidichtungen an oder in KunststoffFormteilen, insbesondere Verschlußdeckeln mit und ohne Durchführungsöffnungen.

## Claims

1. A process for making shaped plastic articles incorporating surface-formed or inserted rubber-elastic parts, wherein circularly closed protruding edges (7) or ring-shaped ribs are formed around those recesses, bores (3) or edges of pre-shaped plastic parts which are to be filled or coated, respectively, with the plastic or liquid form material for forming the rubber-elastic parts, which edges or ribs are brought into sealing contact with predetermined surface areas (9) of the form tool (1) before injecting the form material,
   **characterized in**
   that the air displaced when injecting the form material is led through at least one channel ( 10;10' ) thin like a hair to the gap (11) between the surface area (8) of the preshaped part and the form tool (1), whereat said channel is shaped transversally to the protruding edge and formed like an open groove in the upper edge of the protruding edge and/or in those surface areas of the form tool being in sealing contact with the protruding edge.

2. A form tool for carrying out the method according to claim 1, comprising surface areas inside a mould, onto which surface areas a circularly closed protruding edge or ring-shaped rib of an inserted pre-shaped part is brought into sealing contact when the form tool is closed,
   **characterized by**
   at least one groove (10) thin like a hair in said surface area (9) of the mould, which groove is oriented transversally to the course of the protruding edge (7) or ring-shaped rib, respectively, of the inserted pre-shaped part (2) and which comprises a length larger than the width of the protruding edge.

3. A form tool according to claim 2,
   **characterized by**
   at least two of said grooves (10) which are arranged mutually symmetrically with respect to the ring-shaped course of the protruding edge (7).

4. A form tool according to one of the claims 2 or 3,
   **characterized in**
   that the grooves (10) comprise a cross-sectional area in the range of 2.10$^{-3}$ to 1.10$^{-4}$ mm$^2$.

5. A pre-shaped part for carrying out the method according to claim 1, also in combination with the form tool according to one of the claims 2 to 4, comprising at least one circularly closed protruding edge or ring-shaped rib enclosing those areas to be coated or filled, respectively, with the rubber material,
   **characterized by**
   at least one groove (10') thin like a hair in the protruding edge (7), which groove is oriented transversally to the course of the protruding edge (7) and which extends across the whole width of the protruding edge.

6. A pre-shaped part according to claim 5,
**characterized in**
that the protruding edge (7) projects 0,02 to 0,3 mm over the adjacent surface areas (8) of the pre-shaped part (2) which are not to be coated.

7. A pre-shaped part according to claim 5 or 6,
**characterized in**
that the grooves (10' ) comprise a cross-sectional area in the range of $Z.10^{-3}$ to $1.10^{-4}$ mm$^2$.

8. A pre-shaped part according to one of the claims 5 to 7, consisting of a glass-fiber reinforced plastic material.

9. The usage of the method according to claim 1 for integrally forming and vulcanizing rubber sealings to or inside pre-shaped parts made of plastics, in particular closing caps with and without feed-through openings.

**Revendications**

1. Procédé de fabrication de pièces de plastiques formées comportant des parties élastiques en caoutchouc formées en surface ou insérées, selon lequel une matière moulable (5) plastique ou fluide destinée à former la partie élastique en caoutchouc est injectée, eufancée ou coulée a l'intéreur ou autour des creux, des trous (3),des bords du produit brut ,(2) à enduire de caoutchouc, afin de former des rebords 7) fermés sur tout leur pourtour ou bien des nervures circulaires, et à ce niveau, avant l'apprort de la matière moulable, on dispose la surface (9), prévue pour assurer l'étanchéitè périphérique de l'outil de formage (1), caractérisé par le fait que, lors de l'apport de la matière moulable, l'air déplacé est envoyé a travers un canal fin comme un cheveu (10,10') vers l'espace laissé libre (11) situé entre la surface supérieure du produit brut (8) et l'outil de formage (1) ; ce canal est formé comme un conduit ouvert, et suit un chemin transversal par rappor au rebord, au niveau de la partie supérieure du rebord et/ou dans les zones de surface de l'outil de formae assurant l'étanchéité vis-à-vis du rebord.

2. Outil de formage permettant de mettre le procédé selon la revendication 1, muni en surface d'une cavité où, l'outil de formage étant refermé, conformément a la spécification, un rebord fermé sur tout son pourtour ou bien une nervure appartenant au produit brut placé dans l'outil de formage, parvient a assurer l'étanchéité caractérisé par, au moins un conduit (10) fih comme un cheveu placé au niveau du secteur de surface en forme de cavité, suivant un chemin transversal à celui du rebord ou de la nervure du produit ·brut inséré, et ayant une longueur plus grande que la largeur de celuici.

3. Outil de formage selon la revendication 2, caractérisé par, au moins deux conduits (10) de ce type placés de façon symètrique par rapport au contour du rebord.

4. Outil de formage selon la revendication 2 ou 3, caractérisé en ce que les conduits (10') ont une section comprise entre $2.10^{-3}$ et $10^{-4}$

5. Produit brut permettant de mettre en oeuvre le procédé selon la revendication 1, en liaison avec l'outil de formage conforme a l'une des revendications 2 à 4, avec au moins un rebord ou une nervure entourant complétement une zone destinée a recevoir le caoutchouc, caractérisé par le fait que, au moins un canal fin comme un cheveu (10') est aménagé dans le rebord (7), transversalement à celui-ci, et le traverse intégralement.

6. Produit brut selon la revendication 5, caractérisé en ce que le rebord (7) est situé 0,02 à 0,3 mm au-dessus de la surface voisine ne devant pas recevoir de caoutchouc.

7. Produit brut selon la revendication 5 ou caractérisé en ce que les conduits (l0') ont une section comprise entre $2.10^{-3}$ et $10^{-4}$ mm$^2$.

8. Produit brut selon l'une des revendications 5 à 7 constitué de matériau à base de fibre de verre renforcée.

9. Utilisation du procédé conformément a la revendication 1 pour le moulage et la vulcanisation des joints en caoutcouc, en surface ou insérés dans des pièces plastiques formées, en particulier les couvercles de fermeture avec et sans orifice de perçage.

FIG. 1

FIG. 2